# EUROPEAN PATENT APPLICATION

(11) **EP 2 570 444 A1**
(43) Date of publication of application: **20.03.2013**
(21) Application number: 11181365.5
(22) Date of filing: 15.09.2011
(51) Int. Cl.: C08G 63/553, B65D 81/34, C08G 69/34

(54) **Pizza container**

(71) Applicant: DSM IP Assets B.V., 6411 TE Heerlen (NL)
(72) Inventor: Heuvel, van den, Paul Willem Jan, 6225 KK MAASTRICHT (NL); Aussems, Hendricus Franciscus, 6412 HZ HEERLEN (NL)
(74) Representative: Dorrestijn, Antoon

(57) **Abstract**

Packaging for a pre-baked, dough based product, characterised in that the packaging contains at least one layer of a thermoplastic polymer that has an elongation at break at -20°C of at least 10%, measured according to ISO 527-1 (1993), using a sample according to ISO 527 Type 5A cut out of a 50 - 60 micron thick film and measured at a displacement rate of 500 mm/min, and a melting point (Tm) of at least 200 °C, measured according to ASTM D3418-08, using a heating rate of 10°C/min.

## Description

Packaging for a pre-baked, dough based product and the product packed in the packaging.

The invention relates to a packaging for a pre-baked, dough based product and a pre-baked, dough based product packed in the packaging. A dough is a mixture that comprises flour or meal and a liquid as water or milk as its main ingredients and that is stiff enough to knead or roll. A dough based product is a product that at least partly is produced from dough. Examples of pre-baked, dough based products include a pre-baked pizza, a pre-baked pie, a pre-baked loaf and a pre-baked bread roll.

After being packed, the pre-baked, dough based products are usually stored under freezer conditions, at temperatures as low as -20 °C. Pizzas are for example packed in a thin plastic bag. The pizza and the bag are again packed in a cardboard container. In this way the pre-baked pizzas are for example offered for sale to the consumer.

When preparing the pizza, the consumer removes the cardboard container and the plastic bag from the pizza, places the pizza in an oven at a temperature of above 200 °C for several minutes, to completely bake the pizza. The oven plate must be greased with fat or oil, to prevent the pizza form sticking to the oven plate. The oven plate and oven walls must be cleaned after the finishing of the pizza, because of the fat or oil, and because of crumbs or grains that have been released from the pizza bottom or from the ingredients used on top of the pizza bottom, that often stick to the oven wall and the oven plate, due to the baking process.

The cleaning of the oven plate and the oven walls is inconvenient and time consuming. This is especially true since a pre-baked pizza is often consumed as easy food, at a moment that the consumer does not want to spend a lot of time in preparing his or her food.

Similar arguments are true for further pre-baked, dough based products, such as pies and bread rolls. Furthermore the arguments are not only true if a consumer uses the pre-baked, dough based product, but also if the product is used commercially, for instance in a restaurant. This is because high labour costs are involved in preparing the product.

Aim of the invention is to solve the above referred problem. Surprisingly a solution is given if the packaging for the pre-baked, dough based product comprises at least one layer of a thermoplastic polymer composition that has an elongation at break at -20°C of at least 10%, measured according to ISO 527-1 (1993), using a sample according to ISO 527 Type 5A cut out of a 50 - 60 micron thick film and measured at a displacement rate of 500 mm/min, and a melting point (Tm) of at least 200 °C, measured according to ASTM D3418-08, using a heating rate of 10°C/min.

It is now possible to finish the product by placing it in the oven in the packaging, to bake the product and only to release it from its packaging, after completion of the baking process. In this way it is no longer necessary to use fat or oil and also crumbs or grains originating from the product are not released in the oven. Furthermore a tasty and well-finished product is obtained.

The elongation at break is preferably at least 12.5%, more preferably at least 15 %. The melting point is preferably at least 205 °C, more preferably at least 210 °C, even more preferably at least 215 °C.

Preferably the invention relates to a packaging for a pizza and a pizza packed in the packaging.

In an even further preferred embodiment the packaging is self supporting. This means that the packaging is so stiff, so that it does not bend under the weight of the pre-baked, dough based product to damage the pre-baked product. In this way it is not necessary any more to use an extra cardboard container. The stiffness of the packaging may for example be obtained if the packaging has at least partly a wall thickness of at least 0.25 mm, more preferably of at least 0.5 mm.

Preferably the packaging has the shape of a baking dish, on top closed with a cover. It is possible that only the baking dish comprises the at least one layer of the thermoplastic polymer composition that has an elongation at break and melting point as specified above.

It is also possible that both the baking dish and the cover comprise at least one layer of the thermoplastic polymer composition that has an elongation at break and melting point as specified above.

Preferably the cover contains notches or incisions, to facilitate the opening of the cover or even total release of cover. Preferably at the place of the notches or incisions the wall has a thickness to allow the cover to tear open during the baking process, because of the pressure generated in the packaging during the baking process.

It is possible that the total packaging or a part of the packaging, for example the baking dish, exist of the one layer of the thermoplastic polymer composition that has an elongation at break and melting point as specified above.

The polymer composition of the packaging according to the invention preferably comprises a copolymer comprising monomeric units of a dimerised fatty acid and/or a residue thereof.

The dimerised fatty acids may be obtained from monomeric unsaturated fatty acids by an oligomerisation reaction. The oligomer mixture is further processed, for example by distillation, to yield a mixture having a high content of the dimerised fatty acid. The double bonds in the dimerised fatty acid may be saturated by catalytic hydrogenation. The term dimerised fatty acid as it is used here relates to both types of these dimerised fatty acids, the saturated and the unsaturated. It is preferred that the dimerised fatty acids are saturated.

It is also possible that the copolymer contains monomer units of derivatives of dimerised fatty acid. For example a dimerised fatty diol may be obtained as a derivative of the dimerised fatty acid by hydrogenation of the carboxylic acid groups of the dimerised fatty acid, or of an ester group made thereof. Further derivatives may be obtained by converting the carboxylic acid groups, or the ester groups made thereof, into an amide group, a nitril group, an amine group or an isocyanate group.

The dimerised fatty acids may contain from 32 up to 44 carbon atoms. Preferably the dimerised fatty acid contains 36 carbon atoms.

Further details relating to the structure and the properties of the dimerised fatty acids may be found in the corresponding leaflet "Pripol C36-Dimer acid" of the company UNICHEMA (Emmerich, Germany) or in the brochure of the Company COGNIS (Düsseldorf, Germany) "Empol Dimer and Poly-basic Acids; Technical Bulletin 114C (1997)".

In the production of the copolymer the dimerised fatty acid can be used as a monomer or as a pre-cursor oligomer or polymer. In one example the pre-cursor polymer is a polyester, formed of dimerised fatty acid and/or dimerised fatty diol with any combination of diols or dicarboxylic acids. In another example the pre-cursor polymer is a polyamide, formed of dimerised fatty acid and/or dimerised fatty diamines with any combination of diamines or dicarboxylic acids forming polyamides. It is also possible that the pre-cursor polymer is a polyester-amide.

Preferably the copolymer has a semi-crystalline character, resulting in improved chemical resistance of the copolymer. Suitable copolymers for the cooking bag according to the invention include polyurethanes, polyamides or polyesters.

Preferably the copolymer is a polyester containing further monomer units of at least one dicarboxylic acid and at least one diol. The dicarboxylic acid may be aliphatic or aromatic. Suitable aliphatic dicarboxylic acids include oxalic acid, succinic acid, fumaric acid, suberic acid, sebacic acid and cyclohexane dicarboxylic acid. Suitable aromatic dicarboxylic acids include terephthalic acid, isophthalic acid, ortho-phthalic acid, naphthalene-dicarboxylic acid and para-phenylene dicarboxylic acid. Preferably at least one aromatic dicarboxylic acid is terephthalic acid or naphthalene dicarboxylic acid. Preferably at least 80 mol. %, more preferably at least 90 mol. %, most preferably at least 98 mol. % of the monomer units of dicarboxylic acids of the further monomer units are one or more aromatic dicarboxylic acids. The balance of the dicarboxylic acids of the further monomer units may contain of aliphatic dicarboxylic acids.

Suitable aliphatic diols include for example ethylene glycol, 1,3-propylene glycol, 1,4-butanediol, 1,6-hexanediol, neopentyl glycol, trimethylene glycol, tetramethylene glycol, cyclohexane dimethanol. An example of a suitable aromatic diol is 2,2-bis (4-hydroxyphenyl) propane. Sugar based diols, like for instance isosorbide, isomannite or isoidide may also be used. Preferably greater than 50, more preferably greater than 70, particularly greater than 90, and especially greater than 95 and up to 100 mole % of the diols are aliphatic glycol (s), preferably ethylene glycol and/or 1,4-butanediol.

In a particularly preferred embodiment of the invention, the further monomer units are 1,4-butanediol and terephthalic acid, ethylene glycol and terephthalic acid, ethylene glycol and naphthalene dicarboxylic acid, 1,4-butanediol and naphthalene dicarboxylic acid or mixtures thereof. Most preferably the further monomer units are 1,4-butanediol and terephthalic acid.

The copolymer may further contains units of one or more polyether diols, for example poly(ethylene glycol), poly(propylene glycol), more particular poly-1,3-propylene glycol or poly-1 ,2-propylene glycol, poly(tetramethylene glycol), poly(hexamethyleneglycol), poly(ethylene glycol-tetramethylene glycol)copolymer, poly(ethylene glycol-propylene glycol)copolymers etc.

Preferably the copolymer consists of monomeric units of dimerised fatty acid and/or one or more derivatives thereof, 1,4-butanediol and terephthalic acid.

The ratio between the monomer units of dimerised fatty acid and/or one or more derivatives and the further monomer units in the copolymer may in general vary between wide limits but is chosen particularly on the basis of the desired hardness of the copolymer. The hardness lies in general between 20 and 90 Shore D.

Preferably the copolymer contains between 2 and 40 wt. % of the monomer units of the dimerised fatty acid and/or a derivative thereof, more preferably between 5 and 30 wt. %, even more preferably between 10 and 20 wt.%. This ensures a high melting point of the copolymer and a high flexibility and good low temperature properties.

Examples of the preparation of such copolymers are described in for example Handbook of Thermoplastics, etc. O. Olabishi, Chapter 17, Marcel Dekker Inc., New York 1997,ISBN 0-8247-9797-3, in Thermoplastic Elastomers, 2nd Ed, Chapter 8, Carl Hanser Verlag (1996) ISBN 1-56990-205-4, in Encyclopaedia of Polymer Science and Engineering, Vol. 12, Wiley & Sons, New York (1988), ISBN 0-471-80944, p.75-117 and the references cited therein.

During or after the production of the copolymer additives may be added. These additives can function as anti-oxidants, UV-absorbers, nucleating agents, dies or pigments, inorganic or organic fillers, and anti-static agents. Stabilizers that can be used for example are hindered phenol antioxidants such as 1,3,5-trimethyl-2,4,6-tris(3,5,-di-t-butyl-4-hydroxybenzyl) benzene, and 3,9-bis{2-[3-(3-t-butyl-4-hydroxy-5-methylphenyl)-propionyloxyl-1 ,l-dimethylethyl}-2,4,8,10-tetraoxaspiro[5,5] undecane or stabilizers such as tris(2,4-di-t-butylphenyl)phosphite, trilauryl phosphite, 2-t-butyl-alpha-(3-t-butyl-4-hydroxyphenyl)-p-cumenyl-bis(p -nonylphenyl) phosphite, Examples of the above inorganic fillers are, for example, calcium carbonate, titanium oxide, mica, talc, and so on. Examples of the above ultraviolet absorbers include, for example, p-t-butylphenyl salicylate, 2-hydroxy-4-methoxybenzophenone, 2-hydroxy-4-methoxy-2'-carboxybenzophenone, 2,4,5-trihydroxy-butylophenone, and so on. Examples of the above nucleating agents are talcum, carboxylic acid salts like sodium benzoate and sodium stearate, titanium oxide and so on. Examples of anti-blocking agents are synthetic and natural silica's, talcum, zeolites and fatty amides.

## Claims

1. Packaging for a pre-baked, dough based product, **characterised in that** the packaging contains at least one layer of a thermoplastic polymer that has an elongation at break at -20°C of at least 10%, measured according to ISO 527-1 (1993), using a sample according to ISO 527 Type 5A cut out of a 50 - 60 micron thick film and measured at a displacement rate of 500 mm/min, and a melting point (Tm) of at least 200 °C, measured according to ASTM D3418-08, using a heating rate of 10°C/min.

2. Packaging for a pre-baked, dough based product, **characterised in that** the packaging contains at least one layer of a polymer composition comprising a polymer, which polymer comprises monomeric units of a dimerised fatty acid and/or a residue thereof.

3. Packaging according to claim 1 or 2, wherein the packaging is a packaging for a pizza and a pizza packed in the packaging.

4. Packaging according to any one of claims 1 -3, wherein the packaging is self-supporting.

5. Packaging according to any one of claims 1 - 4, **characterised in that** the packaging has the shape of a backing dish, on top closed with a cover.

6. Packaging according or claim 5, wherein the cover contains notches or incisions to facilitate opening or total release from the cover.

7. Packaging according to claim 6, wherein at the place of the notches or incisions the wall has a thickness to allow the cover to tear open during the baking process.

8. Pre-baked, dough based product packed in a packaging according to any one of claims 1 - 7.

9. Process for preparing a pre-baked, dough based product, **characterised in that** the product of claim 8 is baked in the packaging.
